# EUROPEAN PATENT APPLICATION

(11) **EP 3 905 225 A1**
(43) Date of publication of application: **03.11.2021**
(21) Application number: 20305408.5
(22) Date of filing: 28.04.2020
(51) Int. Cl.: G09B 23/28

(54) **SYSTEM AND METHOD FOR EVALUATING SIMULATION-BASED MEDICAL TRAINING**

(71) Applicant: Université de Strasbourg, 67081 Strasbourg cedex (FR)
(72) Inventor: CHAKFE, Nabil, 67150 Hindisheim (FR); JOERGER, Guillaume, 67100 Strasbourg (FR)
(74) Representative: Cabinet Camus Lebkiri

(57) **Abstract**

The invention relates to a system (2) for evaluating simulation-based medical training of a user, the training being carried out using a simulator (10) and comprising a medical procedure comprising at least one step, the system (2) comprising:
- A user sensing module (20) for acquiring at least one biological signal of the at least one user,
- two cameras, for acquiring images of the movements and positions of the user (1) around the simulator (10) and of the gestures and handling of instruments (11),
- A simulation procedure acquisition module (33) configured to connect to the simulator (10) and acquire the at least one medical procedure and simulation data,
- A processing module (50) configured to:
- process the biological signal of the user (1) and/or the images of the cameras comprising computing the value of a metric representative of the training of the user (1) at each step of the medical procedure,
- create a training evaluation report (521) of the user (1) comprising the value of the metric at each step of the medical procedure.

## Description

### TECHNICAL FIELD

The technical field of the invention is the field of simulation-based medical training.

The present invention concerns an automatic evaluation of simulation-based medical training.

### STATE OF THE ART

In the field of medical training, simulation-based solutions are becoming widely employed and demanded. Using such solutions, a trainee can learn by making mistakes that don't have negative impacts on a real human being. These solutions are made for a trainee to reproduce at least one medical procedure or medical skill. Some of these simulation-based solutions are systems known as "simulators" reproducing part of or the entire human body.

The simulators are computer-based comprising a reproduction of part of or the entire human body and a monitor that can display instructions and tips. These simulators can further comprise tools that interact with the reproduction of part of or the entire human body by for example comprising sensors that send data to the monitor to display in real time the interaction between the tools and the reproduction of part of or the entire human body. This sole interaction does not provide proper feedback on the way the trainee conducts the procedure, as the procedure does not only comprise steps of using tools. For example, the procedure can comprise steps of communicating with the patient and/or with the team, cleaning tools, asking questions, dressing, for example putting gloves etc.

The aforementioned simulators are highly expensive and most of the time underused. Indeed, a problem that arises when learning using these solutions is that a teacher and a student (the trainee) have to be present at the same time in the same place for the trainee to have a proper learning and for the teacher to be able to give proper personalized feedback, as the medical simulators of the state of the art are not capable of providing such a feedback. As medical students and medical teachers have to deal with heavy workload and high pressure, such a requirement is rarely met which results in an underuse of the simulators and thus a waste of space and money.

In order to increase the use of simulators, it has been tried to provide a more realistic medical experience to make the simulators more attractive to students. For example, the simulator presented in WO2018061014 entitled "METHOD AND SYSTEM FOR MEDICAL SIMULATION IN AN OPERATING ROOM IN A VIRTUAL REALITY OR AUGMENTED REALITY ENVIRONMENT" uses virtual reality or augmented reality in order to improve the immersion of the trainee in a simulated operating room. Such a simulator still requires the presence of a teacher to evaluate the trainee and provide him with pieces of advice and feedback and correct him in his gestures.

There is therefore a need to provide a solution that allows to evaluate automatically a simulation-based training of a user, while keeping this solution less expensive than simulators of the state of the art.

### SUMMARY OF THE INVENTION

According to a first aspect of the invention, this need is satisfied by providing a system for evaluating simulation-based medical training of at least one user, the simulation-based medical training being carried out using a simulator and comprising at least one medical procedure comprising at least one step, the system being characterized in that it comprises:
- At least one user sensing module for acquiring at least one biological signal of the at least one user,
- At least a first and a second camera, the first camera being configured to acquire images of the movements and positions of the at least one user around the simulator, the second camera being configured to acquire images of the gestures and handling of instruments of the simulator of the at least one user,
- At least one simulation procedure acquisition module configured to connect to the simulator and acquire the at least one medical procedure and simulation data,
- At least one processing module configured to:
- process the at least one biological signal of the at least one user and/or the images of the first camera and/or of the second camera, the processing comprising computing the value of at least one metric representative of the training of the user at each step of the medical procedure,
- create a training evaluation report of the at least one user, the training evaluation report comprising the value of the at least one metric at each step of the medical procedure.

Thanks to the invention, a training evaluation report is automatically created and the presence of both a teacher and a trainee at the same place and at the same time is not required. Indeed, the trainee can use the simulator and the system according to the invention will provide for an objective, automatic report comprising the evaluation of the training of the trainee. The at least one metric makes the report close to reality and reliable. The teacher and / or the trainee can then access the evaluation report at a later time.

The present invention permits to solve the problem of the underuse of medical simulators, by giving more autonomy to the students and by providing a reliable automatic insight of the course of the training process using the simulator. The simulators of the state of the art tend to favour a recreational use by users, as users are not monitored during their use. The invention permits to avoid such a recreational "feeling" when using simulators, by providing a simulation closer to reality and by automatically monitoring the use of the simulator without a physical presence.

The invention also makes it possible to adapt an existing simulator, as the modules of the system according to the invention are independent from the simulator. This allows more flexibility and a lower cost of the system by not having to replace existing expensive simulators.

The system according to the first aspect of the invention may also have one or more of the following characteristics, considered individually or according to any technically possible combinations thereof:
- the at least one metric representative of the training of the user is at least one metric of the metrics of attention of the user, of areas of interest for the user, of workload of the user, of distraction of the user, of emotional valency of the user.
- the at least one processing module is further configured to send the training evaluation report through at least one network.
- the user sensing module comprises at least one of:
   - At least one eye tracking submodule comprising at least one eye tracker,
   - At least one electroencephalography sensor,
   - At least one microphone,
   - At least one sensing clothing comprising at least one sensor,
- And in that the at least one biological signal of the at least one user comprises at least one of:
   - a signal of the points of gaze of the user acquired by the eye tracking submodule,
   - a signal of the cortical electrical activity of the user acquired by the electroencephalography sensor,
   - a signal of at least part of the sound produced by the user acquired by the microphone,
   - an electrocardiogram of the user acquired by the sensing clothing,
   - a signal of the breathing rate of the user acquired by the sensing clothing,
   - a signal of the temperature of the user acquired by the sensing clothing,
   - a signal of the accelerometry of the user acquired by the sensing clothing.
- the system further comprises a sensing floor module for acquiring at least a signal of the position of the user.
- the system further comprises at least one display module and that the processing module is further configured to send at each step of the simulation-based medical training the computed value of the at least one metric representative of the training of the user to the at least one display module, the at least one display module being configured to receive and display the computed value of the at least one metric representative of the training of the user.

A second aspect of the invention relates to a method for evaluating simulation-based medical training of at least one user, the simulation-based medical training comprising at least one step and being carried out using a simulator, the method being implemented by the system according to any one of the preceding claims, the method comprising at least the steps of :
- acquiring, by the user sensing module, at least one biological signal of the user,
- sending, by the user sensing module, the at least one biological signal of the user to the processing module,
- acquiring, by the first camera, images of the movements and positions of the at least one user around the simulator,
- sending, by the first camera, the images to the processing module,
- acquiring, by the second camera, images of the gestures and handling of instruments of the simulator of the at least one user,
- sending, by the second camera, the images to the processing module,
- processing, by the processing module, the at least one biological signal of the user and the images of the first camera and of the second camera, the processing comprising computing the value of at least one metric representative of the training of the user at each step of the simulation-based medical training,
- creating, by the processing module, a training evaluation report of the at least one user, the training evaluation report comprising the value of the at least one metric at each step of the simulation-based medical training.

The method according to the first aspect of the invention may also have one or more of the following characteristics, considered individually or according to any technically possible combinations thereof:
- the method further comprises the steps of:
   - Connecting, by the simulation procedure acquisition module, to the simulator,
   - Acquiring, by the simulation procedure acquisition module, from the simulator, the at least one medical procedure and simulation data
   - sending, by the simulation procedure acquisition module, the at least one medical procedure and simulation data previously acquired to the processing module.
- the method further comprises the steps of:
   - sending, by the processing module and at each step of the simulation-based medical training, the computed value of the at least one metric representative of the training of the user to the at least one display module,
   - receiving, by the at least one display module, the computed value of the at least one metric representative of the training of the user,
   - displaying, by the at least one display module, the computed value of the at least one metric representative of the training of the user.
- the method further comprises the step of sending the training evaluation report through at least one network.

A third aspect of the invention relates to a computer program product comprising instructions which, when the program is executed by a computer, causes the computer to carry out the method according to the invention.

A fourth aspect of the invention relates to a computer-readable medium comprising instructions which, when executed by a computer, cause the computer to carry out the method according to the invention.

The measure of the sensors, the images of the cameras, coupled with the simulator data, permit to make sure that the training has been fully followed by the trainee and to provide a report that is automatic and reliable. The simulation procedure acquisition module further permits to enhance the training evaluation report, by providing even more information on the training and to correlate the information with each step of the simulation procedure by being connected to the simulator.

The ability of the processing module to create a training evaluation report and to send it through at least one network makes it possible for the teacher to be in another place than the training room at another time than when the training takes place and to evaluate the trainee's learning based on the report. Moreover, it makes it possible for the teacher or evaluator to evaluate several trainees at a time, and also to evaluate trainees that are not at the same place of training. The present invention gives more advantages to existing simulators, making them more attractive and more practical for both med students and med teachers.

The invention finds a particular interest when several users use the same simulator, permitting to evaluate the collaboration between the users, which cannot be done by existing simulators. This characteristic is emphasized in the embodiment where the invention comprises a sensing floor.

Another advantage of the invention is that the system can display in real time the results of the computing of the metrics so the trainee can also have access to this information and proactively correct his gestures, movements, state of mind etc. for the rest of the training or for the future.

Another advantage of the invention is that the system can store the medical procedure evaluated for the same user 1 and therefore provide the user 1 with a record of all the carried-out procedures and how they were carried out. The user 1 can then use this record to prove his skills, the evaluation being reliable and automatic.

Moreover, the invention can advantageously be applied to the medical training in several fields of medical science, depending on the simulator the system is connected to.

### BRIEF DESCRIPTION OF THE FIGURES

Other characteristics and advantages of the invention will become clear from the description that is given thereof below, by way of indication and in no way limiting, with reference to the appended figures, among which:
- Figure 1 is a schematic representation of a system according to the invention,
- Figure 2 is a schematic representation of a system according to the invention in use during the training of a user,
- Figure 3 is a schematic representation of an embodiment of the invention where several systems according to the invention are in use in different training rooms,
- Figure 4 is a schematic representation of a method according to the invention.

### DETAILED DESCRIPTION

For greater clarity, identical or similar elements are marked by identical reference signs in all of the figures.

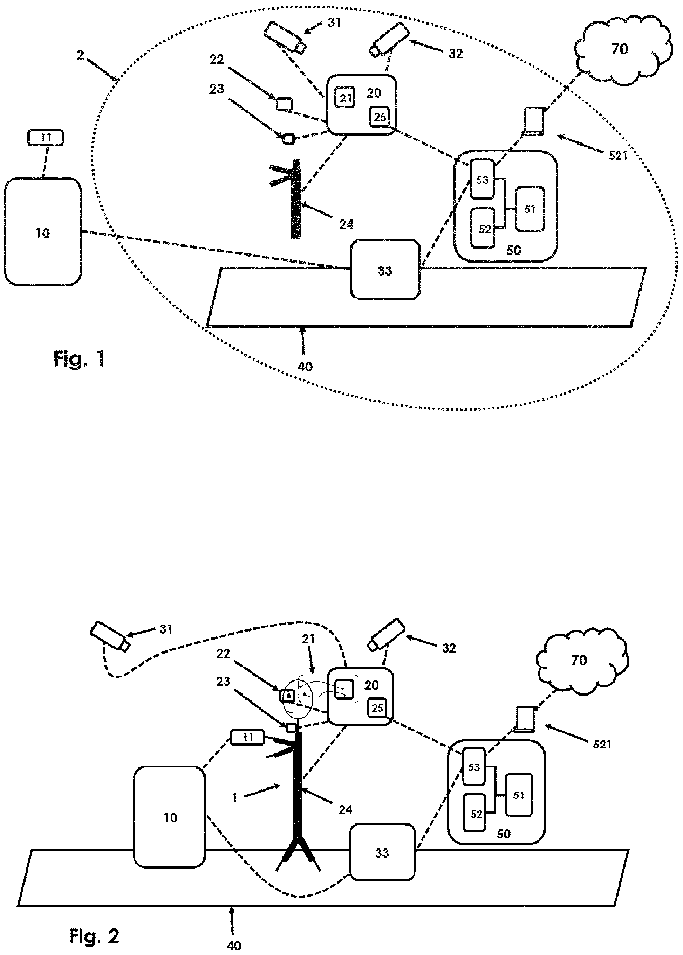

Figure 1 presents an embodiment of a system according to the invention. The system 2 according to the invention schematically represented at figure 1 comprises a user sensing module 20, a first camera 31 and a second camera 32, a simulation procedure acquisition module 33, a sensing floor 40, and a processing module 50. The system 2 is meant for evaluating simulation-based medical training of at least one user, the simulation-based medical training being carried out using a simulator 10 and comprising at least one medical procedure comprising at least one step.

The user sensing module 20 represented at Figure 1 comprises a plurality of sensors for acquiring at least as much different biological signals from a user as the number of sensors it comprises. It is still in the scope of the invention when the user sensing module 20 comprises one sensor. It is acknowledged that the user sensing module 20 comprises sensors that are non-invasive, therefore being easier to use by different users over time.

In a preferred embodiment, the user sensing module 20 comprises:
- At least one electroencephalography sensor 21,
- At least one eye tracking submodule 22 comprising at least one eye tracker,
- At least one microphone 23,
- At least one sensing clothing 24 comprising at least one sensor.

The user sensing module 20 can also comprise any other sensor for acquiring a biological signal of the user. It is understood by "biological signal" of a user a signal representative of at least part of a biological event of a user. For example, such biological event can be a heartbeat, a muscle contraction, sweating, breathing, swallowing, a rise of temperature of at least part of the body, blinking, a change in pupil size etc.

The user sensing module 20 according to the invention can comprise any combination of any of the sensors previously mentioned.

The electroencephalography sensor 21 is configured to acquire an electroencephalogram of a user. An electroencephalogram represents the cortical electrical activity of a user as a function of time. The electroencephalogram, or cortical electrical activity signal, acquired by the electroencephalography sensor 21 can be stored by the user sensing module 20 for later transmission, for example in a local memory of the user sensing module 20 (not represented). This cortical electrical activity signal will allow to compute several metrics representative of the learning of a user as will be described later.

The eye tracking submodule 22 comprises at least one eye tracker configured to acquire the field of view and the points of gaze of a user. It is understood by "points of gaze" the points where the user wearing the eye tracking submodule 22 looked. Different eye trackers exist, for example eye-attached trackers, comprising an object like a contact lens attached to the eye, the eye-attached trackers tracking the eye by tracking the movement of the attached object. Other type of eye tracker are measuring the electric potential with electrodes placed around the eye. The most used eye trackers use video-oculography by tracking for example with cameras the dark pupil and/or the rotations and positions of the eye, often by using infrared radiation. This last type of eye trackers using video-oculography is the preferred type of eye tracker in the present invention as it is not invasive and is easy to place and use. When the eye tracking submodule 22 uses video-oculography, and in order to process the videos of the cameras it comprises, the eye tracking submodule 22 can comprise a microprocessor and a memory (not represented).

The "points of gaze" signal acquired by the eye tracking submodule 22 can be stored by the user sensing module 20 for later transmission, for example in a local memory of the user sensing module 20 (not represented). This "points of gaze" signal will allow to compute several metrics representative of the learning of a user as will be described later. The eye tracking submodule can further be configured to acquire a signal of the accelerometery of the user.

The microphone 23 is configured to acquire a signal of at least part of the sound produced by the user. The signal of at least part of the sound produced by the user acquired by the microphone 23 can be stored by the user sensing module 20 for later transmission, for example in a local memory of the user sensing module 20 (not represented). This signal of at least part of the sound produced by the user will allow to compute several metrics representative of the learning of a user as will be described later.

The sensing clothing 24 is configured to acquire at least one signal from the following signals:
- an electrocardiogram of the user,
- a signal of the breathing rate of the user,
- a signal of the temperature of the user,
- a signal of the accelerometery of the user.

Such a sensing clothing 24 is also called a "smart clothing". The sensing clothing 24 can be any type of clothing made to acquire at least one of the signals presented in the previous paragraph. In can also be a regular clothing to which at least one sensor is attached. The system 2 according to the invention can comprise, for the same user, several different sensing clothes 24. When different sensing clothes 24 are used, two different clothes 24 preferably do not measure the same biological signal.

For example, the sensing clothing 24 can be a tee-shirt, as represented at Figure 1.

The sensing clothing 24 can comprise a heartbeat sensor configured to acquire the heartbeat of the user wearing the sensing clothing 24. It is understood by an "electrocardiogram" of the user the heartbeat of the user as a function of time.

The sensing clothing 24 can also comprise a breathing rate sensor configured to acquire a signal of the breathing rate of the user. The breathing rate sensor can be an accelerometer, deriving the breathing rate from the accelerometery measured, or a pulse oximeter, deriving the breathing rate from a photoplethysmogram (measuring changes in volume within an organ by illuminating the skin and measuring light absorption). The breathing rate signal can also be derived from the electrocardiogram acquired from the heartbeat sensor. All the other sensors that measure a signal that can represent the breathing rate or from which the breathing rate can be derived can be used as a breathing rate sensor.

The sensing clothing 24 can also comprise a thermometer configured to acquire a signal of the temperature of the user and an accelerometer to acquire a signal of the accelerometery of the user.

Each of the signals measured by the sensing clothing 24 allows to represent a biological event of the body of the user and thus when several signals are measured it allows to represent the physical state of the user.

The signals acquired by the sensing clothing 24 can be stored by the user sensing module 20 for later transmission, for example in a local memory of the user sensing module 20 (not represented). These signals will allow to compute several metrics representative of the learning of a user as will be described later.

All the sensors 21 to 24 comprised in the user sensing module 20 are connected to a central part (not represented) of the user sensing module 20 comprising at least a microprocessor, a memory and a network interface 25, either wirelessly, or by wired means. When the connection is wireless, the Bluetooth®, Wi-Fi®, LoRa®, or any other wireless protocol can be used. For less impact on the training of the user, wireless connection of the sensors to the central part of the user sensing module 20 will be preferred.

The system 2 comprises at least two cameras 31 and 32. The cameras 31 and 32 are configured to acquire images of the user (not represented at Figure 1). The system 2 can comprise more than two cameras.

The first camera 31 is configured to acquire images of the movements and positions of a user around the simulator 10. The second camera 32 is configured to acquire images of the gestures and handling of instruments 11 of the simulator 10 by a user. It is meant by "configured to acquire images of" a particular initial positioning of a camera in order to acquire the corresponding images. Therefore, the first camera 31 will preferably be positioned in the back of the user when the user is using the simulator 10 so as to acquire images of the position and of the movements of the user around the simulator 10, and the second camera 32 will preferably be positioned so as to acquire image of the front of the user to acquire images of the gestures and handling of instruments 11 of the simulator 10 of the user.

The system 2 represented at Figure 1 further comprises a simulation procedure acquisition module 33 configured to connect to the simulator 10 and acquire the at least one medical procedure and simulation data from the simulator 10. The procedure acquisition module 33 can comprise a plurality of configurations for different known simulators 10 it can connect to. Therefore, the simulation procedure acquisition module 33 is able to request from the simulator 10 data of the simulation, for example regarding the instruments 11 of the simulator 11, the different steps of the procedure of the simulation and reports created by the simulator 11. The simulation procedure acquisition module 33 can also be universal and connect to any kind of simulator, for example by analysing the data displayed by the simulator 10.

The system 2 further comprises a sensing floor 40. A large number of different sensing floors exist on the market; therefore, the invention does not restrict to a particular type of sensing floor 40. A sensing floor can be monobloc or can be made of several tiles for sensing the movement of the user and any event impacting the floor. For example, the sensing floor 40 can detect when the user drops an instrument 11 or any other object during the simulation. The sensing floor 40 is particularly advantageous in simulations of medical procedure requiring radioprotection. It also particularly advantageously allows to measure efficiency of users and collaboration between them.

The system 2 further comprises a processing module 50, connected to the simulation procedure acquisition module 33 and to the user sensing module 20. The processing module 50 can also be connected to the cameras 31 and 32. That is if the cameras 31 and 32 are not connected to the user sensing module 20. Indeed, for the cameras 31 and 32 to transmit images to the processing module 50, the cameras 31 and 32 can transmit the acquired images to the user sensing module 20 which will forward them to the processing module 50 along with the signals from the other sensors 21 to 24 as represented at Figure 1, or the cameras 31 and 32 can directly transmit them to the processing module 5.

The user sensing module 20 is configured to transmit the biological signals it receives from the sensor 21 to 24 and, depending on the embodiment, images from the cameras 31 and 32. This transmission can be wired or wireless, using known transmission protocols, and is made through the network interface 25 of the user sensing module 20.

The processing module 50 comprises a network interface 53 for receiving the biological signals from the sensors 21 to 24 sent by the user sensing module 20, the images acquired by cameras 31 and 32, and the medical procedure and simulation data acquired from the simulator 10 by the simulation procedure acquisition module 33 and transmitted by said module 33. The processing module 50 further comprises at least one microprocessor 51 and a memory 52 and is configured to process the biological signals received and the images of the first camera and of the second camera, the processing comprising computing the value of at least one metric representative of the training of a user at each step of the medical procedure. The memory 52 comprises instructions which are carried out by the processor 51 at least to realize the processing of biological signals, images and data received and create the training evaluation report 521.

Figure 2 is a schematic representation of a system according to the invention in use during the training of a user.

Even if, at Figure 2, only one user 1 is represented, it is acknowledged that the invention can be applied to several users using the same simulator 10, or to several users using several simulators 10 in the same training room. Indeed, the system 2 can advantageously be applied to several simulators 10 simultaneously in the same room.

In order to manage several trainings of several users 1 simultaneously, the system 2 can comprise several user sensing modules 20, or one user sensing module 20 comprising several sensing clothes 24, several EEG sensors 21, several eye trackers 22 and several microphones 23. The system 2 only needs one sensing floor 40 to manage several user's learnings, the sensing floor 40 allowing to reliably evaluate the collaboration between the users 1. If the training comprises several simulators 10, the system 2 can comprise several simulation procedure acquisition module 33, one for each simulator 10.

In the schematic representation of Figure 2, the user 1 uses the simulator 10 by following a procedure and by using instruments 11 of the simulator. Such instruments 11 can be a guide wire, an introducer, a stent, a balloon, or any other known instrument. The procedure can comprise the steps of introducing an instrument 11, of injecting fluids etc. In a general manner, the procedure is medical, that is to say the procedure is related to the medical field, is related to healthcare or can be used to treat a patient, to perform a surgery or in general to improve his health.

The medical procedure followed by user 1 can be proposed by the simulator 10. In such a case, the simulation procedure acquisition module 33 acquires and transmits the medical procedure from the simulator 10 to the processing module 50 before the beginning of the simulation. The steps could also change during the procedure, therefore, the simulation procedure acquisition module 33 can further be configured to send an updated medical procedure during the simulation to the processing module 50. The processing module 50 can also process after the medical procedure, therefore, the simulation procedure acquisition module 33 can further be configured to transmit the medical procedure after the simulation has been completed.

In real time, at each step of the procedure, or at the end of the procedure, the processing module 50 receives the biological signals acquired by the sensors 21 to 24, images from the cameras 31 and 32, simulation data from the simulation procedure acquisition module 33 and data from the sensing floor 40.

The emission from the different sensors and modules and the reception of the processing module 50 can be carried out according to a wireless protocol. For example, the Bluetooth®, Wi-Fi®, LoRa®, or any other wireless protocol can be used. The emission from the different sensors and modules and the reception of the processing module 50 can also be carried out using wired means. Some of the connections between the module(s) and the processing module 50 can be wired, and some can be wireless, any combination being comprised in the invention.

The transmission of data between the processing module 50 and the different other modules of the system 2 can also be carried out through at least one network, when the processing module 50 is located in a different place than the simulator, even if this is not the preferred embodiment.

In order to accurately and objectively evaluate the training of the user 1 during the simulation, the processing module 50 is configured to compute the value of at least one metric representative of the training of the user 1 at each step of the medical procedure. This permits then to the processing module 50 to create a training evaluation report 521 of the user 1, the training evaluation report 521 comprising the value of the at least one metric at each step of the medical procedure.

The metrics are derived from the data received by the processing module 50. For example, the data can comprise at least one of, but not limited to, the biological signals acquired by the sensors 21 to 24, the images acquired by the cameras 31 and 32, the data acquired by the sensing floor 40, the simulation data acquired by the simulation procedure acquisition module 33.

A first metric is the workload of user 1, that indicates the load of information processed by the brain, linked to the difficulty of the task being carried out by user 1. The workload can be derived from the electroencephalogram acquired by the electroencephalography sensor 21 and can take a value between 0 and 1. An overload can be detected when the workload overpasses 0.7, as explained in [Berka, C., D. Levendowski, et al. (2007). "EEG Correlates of Task Engagement and Mental Workload in Vigilance, Learning and Memory Tasks." Aviation Space and Environmental Medicine 78(5): B231-B244].

Another metric is the attention of the user, indicating information taking, visual scanning or selective attention. Attention increases when users 1 must allocate their attention to encoding and processing auditory, visual or haptic information. Attention of the user is for example obtained by analysing the electroencephalogram acquired by the electroencephalography sensor 21.

Another metric is the areas of interest for the user 1, indicating for example the proportion of time spent in the different areas of interest according to the steps of the medical procedure, and the looks at an assistant during the handling of the instruments 11 if an assistant is present. The areas of interest are directly derived from the points of gaze signal acquired by the eye tracking submodule 22. The objects at which the user 1 looks can be automatically analysed using image recognition in order to automatically classify the areas of interest and link the gazes to the objects.

Another metric is the distraction and drowsiness of the user, highlighting times when the user 1 is involved in a task other than the one he is supposed to perform, usually due to frustration, fatigue or boredom. This metric can be derived from the points of gaze signal acquired by the eye tracking submodule 22, the electroencephalogram acquired by the electroencephalography sensor 21 and the images from the cameras 31 and 32.

Another metric is the emotional valency of the user, indicating the positive or negative nature of the emotion felt by the user 1 as he carries out steps of the medical procedure. This metric can be derived from the electroencephalogram acquired by the electroencephalography sensor 21.

Other metrics can provide information such as, but not limited to, the amount of movement around the simulator 10, the cooperation between users 1, the trajectories of users 1, the stress of the user 1 etc.

The computing of metrics allows for a concise but complete report, by reducing the amount of data comprised in the report and providing metrics representing the body state of user 1.

The processing module 50 is further configured to create a training evaluation report 521 of the user 1, the training evaluation report 521 comprising the value of the at least one metric at each step of the medical procedure.

Therefore, the training evaluation report 521 can comprise a value of at least one of the metrics presented in the previous paragraphs [0060] to [0064], preferably of all of the metrics. Indeed, the more metrics it comprises, the more accurate and closer to how the procedure was carried out by the student the training evaluation report 521 is. The invention finds a good balance between the amount of data presented to the teacher and the accuracy of the report 521.

Thanks to this automatic report, the teacher does not have to be present when the trainee (user 1) carries out the simulation-based medical procedure. The teacher will have the ability, thanks to the invention, to evaluate accurately the trainee at a later time based on how the trainee carried out the medical procedure in the past. The trainee can further read the report before the teacher even have reviewed it, to know how he did and what he could improve. The system according to the invention can further highlight steps depending on whether they were carried out.

For example, the system can highlight the steps that were carried out wrongly, based on a threshold of some of or all of the metrics. If the computed value of at least one of the metrics is below this threshold, the step can be highlighted as "to improve", for example with a label or any other mean of highlighting.

For example, the system can highlight the steps that were well carried out, based on a threshold of some of or all of the metrics. If the computed value of at least one of the metrics is beyond this threshold, the step can be highlighted as "mastered", for example with a label or any other mean of highlighting.

The system 2 can further be configured to store all the evaluated medical procedure for the user 1. This can be used to provide the user 1 with a record of all the carried-out procedures and how they were carried out. The user 1 can then use this record to prove his skills, the evaluation being reliable and automatic. The user 1 can also evaluate his progression in time on the same medical procedure if he carried it out several times.

Therefore, the report 521 is automatic, reliable as it is based on measures of biological signals, and self-sufficient for the trainee to auto-evaluate or to be evaluated by an expert. This allows to improve the attractivity and therefore the use of existing simulators 10 at a lower cost, without having to replace the simulator 10.

The processing module 50 can be configured to emit the training evaluation report 521 through at least one network via the network interface 53. This network can be of the TCP/IP type or of any other type that permits data to be transmitted from one point to another.

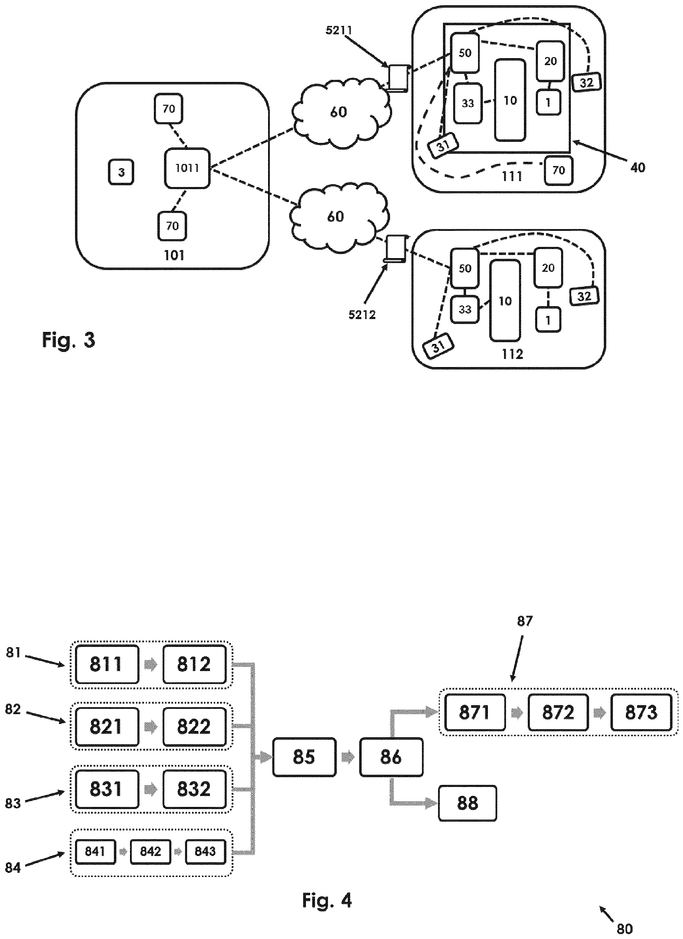

Figure 3 is a schematic representation of an embodiment of the invention where several systems 2 according to the invention are in use in different training rooms.

Figure 3 illustrates another interesting characteristic of the invention, that is the fact that a plurality of systems 2 can be distributed in several training rooms at different places.

At Figure 3, the training rooms 111 and 112 comprise each one system 2 for evaluating the simulation-based medical training of at least one user 1.

The invention is advantageously modular, meaning that in each training room the system 2 can comprise different modules. For example, the training room 111 comprises a sensing floor 40 while the training room 112 does not.

The training room 111 comprises a display module 70. A display module 70 is configured to display the training evaluation report 521 created by the processing module 50 to the user(s) 1. To do so, the processing module 50 is further configured to transmit the training evaluation report 521 to the display module 70.

In another embodiment, the display module 70 can be configured to display at each step of the simulation-based medical training the value of the at least one metric representative of the training of the user 1 computed by the processing module 50. To do so, the display module 70 is configured to receive and display the computed value of the at least one metric representative of the training of the user and the processing module 50 is configured to send at each step of the simulation-based medical training the value of the computed at least one metric representative of the training of the user 1. The display module 70 allows the user 1 to have real-time feedback on the way he carries out the medical procedure and therefore to enhance his medical training. The display module 70 can display the training report 521 by comprising a display such as a screen or any other display. The user 1 can then adapt his state of mind and gestures to the feedback of the display module 70. The display module 70 and the processor 50 can exchange information via wired means or wirelessly.

As represented Figure 3, a teacher or expert 3 in another room 101 can receive the training evaluation report 521 via at least one network 60. For example, an in a preferred embodiment, this network 60 is of the TCP/IP type, for example the Internet network.

The systems 2 used in the training rooms 111 and 112 can send the training evaluation reports 5211 and 5212 simultaneously to a processing module 1011. The processing module 1011 is configured to receive the training evaluation reports 5211 and 5212 and transmit them to display modules 70, in real time or at the end of the training. The training reports 5211 and 5212 can be displayed using the same display module 70 or on separate display modules 70. The processing module 1011 can further be configured to store the received training modules 5211 and 5212, for example in a database, for example a local database or a database accessible through a network. That way, the teacher, trainer or expert 3 can access both training reports 5211 and 5212 at the same time. He can also access them separately later. The display module 70 can comprise an option for displaying one training report 5211 or the other 5212.

The invention thus permits a decentralized and automatic evaluation of medical trainings using simulators 10. The evaluation can further be real-time.

Figure 4 is a schematic representation of an embodiment of the method according to the invention.

The method 80 according to an embodiment of the invention represented at Figure 4 comprises four steps 81 to 84 carried out by the sensors 21 to 24 of the user sensing module 20, two steps 85 and 86 carried out by the processing module 50, one step 87 carried out by the display module 70 and/or one more step 88 carried out by the processing module 50.

The four steps 81 to 84 are preferably carried out simultaneously, or at least sensibly during the same period, at least starting at about the same time. This permits to acquire different signals and pieces of data from sensibly the same period, enabling to have data representing how the training is carried out at each step of the medical procedure. Preferably, the four steps 81 to 84 are repeated several times, preferably as long as the medical procedure lasts.

The step 81 is carried out by the user sensing module 20 and comprises two sub steps. The step 81 comprises a first sub step 811 of acquiring, by the user sensing module 20, at least one biological signal of the user 1. Of course, it will be understood that it is possible to acquire several biological signals in order to have more precise metrics computing and therefore a more accurate report. The step 81 comprises a second sub step 812 of sending, by the user sensing module 20, the at least one biological signal of the user 1 to the processing module 50.

The step 82 is carried out by the first camera 31 and comprises a sub step 821 of acquiring, by the first camera 31, images of the movements and positions of the user 1 around the simulator 10. This allows to track the user 1 around the simulator 10 and provide him feedback on his use of the simulator 10. For example, if the user 1 moves too much around the simulator 10, it can distract him and prevent him from being efficient in his carrying out of the medical procedure. This acquisition of images can result in the computing of metrics related to the position, the trajectory, the efficiency and/or the cooperation of the user(s) 1. Step 82 comprises another sub step 822 of sending, by the first camera 31, the images to the processing module 50.

The step 83 is carried out by the first camera 31 and comprises a sub step 831 of acquiring, by the second camera 32, images of the gestures and handling of instruments 1 of the simulator 10 of the user 1. This acquisition of images can result in the computing of metrics related to the use of the simulator 10, the handling of instruments 11, the efficiency of the user 1, shakings of the hand of the user 1 etc. Step 83 comprises another sub step 832 of sending, by the second camera 32, the images to the processing module 50.

The method 80 according to the invention can further comprises a step 84 carried out by the simulation procedure acquisition module 33. This step 84 comprises a first sub step 841 of connecting, by the simulation procedure acquisition module 33, to the simulator 10. This connection can be carried out using a known protocol or a known configuration of the simulator 10.

The step 84 comprises another sub step 842 of acquiring, by the simulation procedure acquisition module 33, from the simulator 10, the at least one medical procedure and simulation data. This sub step can be carried out regularly, for example every second, every 10 seconds or every minute etc. This sub step can also be carried out punctually, for example at the end of the simulation procedure, for example to acquire the simulation report from the simulator 11. The acquisition can be made either from pulling data from the simulator 10 by the simulation procedure acquisition module 33, or by pushing data from the simulator 10 to the simulation procedure acquisition module 33.

Finally, the step 84 comprises a sub step 843 of sending, by the simulation procedure acquisition module 33, the at least one medical procedure and simulation data previously acquired at the sub step 842 to the processing module 50.

When the steps 81 to 84 are completed, or as soon as the processing module 50 receives data from one of the modules 20, 31, 32, 33, and/or 40, the processing module 50 carries out the steps 85 and 86.

The step 85 is a step of processing, by the processing module 50, the at least one biological signal of the user 1 and/or the images of the first camera 31 and/or of the second camera 32, the processing comprising computing the value of at least one metric representative of the training of the user 1 at each step of the simulation-based medical training. The computing of the metrics has been described previously.

The step 86 is a step of creating, by the processing module 50, a training evaluation report 521 of the at least one user 1, the training evaluation report 521 comprising the value of the at least one metric at each step of the simulation-based medical training. This creation of a training evaluation report 521 has also been described previously.

Finally, when the training evaluation report 521 is created, two steps 87 and 88 can be carried out. The method can comprise one of the steps 87 and 88, or both.

The step 87 comprises a first sub step 871 of sending, by the processing module 50 and at each step of the simulation-based medical training, the computed value of the at least one metric representative of the training of the user 1 to the at least one display module 70.

The step 87 further comprises a sub step 872 of receiving, by the at least one display module 70, the computed value of the at least one metric representative of the training of the user 1 a sub step 873 of displaying, by the at least one display module 70, the computed value of the at least one metric representative of the training of the user 1. This permits to provide feedback to the user 1 in real time, during the carrying out of the medical procedure.

Method can also comprise the step 87 of sending the training evaluation 521 report through at least one network 60, this step 87 being carried out by the processing module 50.

In the following paragraphs, several examples of use of the invention will be described.

In a first example, the use of the system and the method of the invention in an open repair surgery for an abdominal aortic aneurysm will be described.

The surgery procedure comprises an initial phase comprising a checklist. The system 2 according to the invention can be used for example to provide checklist management, for example by displaying the checklist on the display module 70. Furthermore, the system 2 is preferentially used to verify that all the points of the checklist have been followed by the user 1, for example using the cameras 31 and 32 to acquire images of the movements and positions of the user 1 around the simulator 10 and of the gestures of the user 1 and handling of instruments 11. It is further possible to evaluate the workload of the user 1 as explained previously in the description. Such workload of the user 1 can be evaluated through the whole surgical procedure and can be reported in the training evaluation report 521 at every step of the procedure. That way, the user 1 and his teacher can know about the workload of the user at each step. A workload too important might be a sign of potential errors during the procedure and that can be reported in the training evaluation report 521.

At a next step, the surgery procedure comprises for example the dissection of the planes to control the aneurysm: this phase is of different length and can be an element of fatigue before the phase of direct re-treatment of the aneurysm. Thus, the system 2 can be used to evaluate the distraction and drowsiness of the user 1 as explained previously in the description. Such evaluation results in giving a value to the metric and comparing it to a reference value. For example, the distraction and drowsiness can be evaluated using a value scale and can comprise comparing the evaluated value of the metric to the value scale. When the evaluated value of the metric corresponds to a "good" or an "acceptable" value, the corresponding evaluation in the training evaluation report 521 is positive. When the evaluated value of the metric corresponds to a "bad" or an "unacceptable" value, the corresponding evaluation in the training evaluation report 521 is negative.

The procedure can further comprise aortic clamping and opening of the aneurysm. These steps can be evaluated by the simulator 11, said evaluation being enhanced by the user sensing module and the cameras 31 and 32.

Then a proximal anastomosis is for example carried out. At this step the dexterity can be evaluated by the system 2 according to the invention. For example, an evaluation of dexterity according to anatomical conditions (depth, narrowness of the field) and distraction and drowsiness can be carried out. At this stage, complications can be introduced, and it is therefore crucial to evaluate the emotional valency and the gesture response. The gesture response can be evaluated by both the simulator 11 and by the system 2 for example using the cameras 31 and 32 to enhance the evaluation of the simulator 11. The combined evaluations can be reported in the training evaluation report 521 for the user 1 and his teacher to have a summarized but complete view of the way the user 1 carried out this step.

A distal anastomosis on the aorta or on the 2 iliac arteries is then carried out, on which steps another evaluation of the emotional valency and the gesture response can be carried out.

At a last step, a closure of the abdomen has to be carried out. At this step, an evaluation of the attention of the user is crucial as the end of a surgical procedure comprises risks of errors with the user 1 releasing his attention. It is in such a phase that one pricks oneself with a needle, for example. The attention can be evaluated by giving it a value between 0 and 1 for example. When said value is given, it can be compared to one or more reference values and can provide a summarized but complete feedback about the attention of user 1 during the carrying out of this last step.

The evaluation of the metrics can further be linked to the difficulty of the step of the medical procedure. For example, the value scale according to which the metric is evaluated can be adapted as a function of the difficulty of the step to be carried out. This can be specified by configuration of the system 2.

The training evaluation report 521 can be displayed as it is built or when it is complete, when the surgical procedure has been carried out entirely. The training evaluation report 521 then comprises each of the evaluations of the metrics evaluated at each step of the surgical procedure, thus enabling the user 1 and any other person with authorization to have an automatic and complete personalised feedback.

The invention can also be used to evaluate new medical devices or to develop them. It can permit to optimize the use and ease of use of the new medical device.

## Claims

1. System (2) for evaluating simulation-based medical training of at least one user (1), the simulation-based medical training being carried out using a simulator (10) and comprising at least one medical procedure comprising at least one step, the system (2) being **characterized in that** it comprises:
- At least one user sensing module (20) for acquiring at least one biological signal of the at least one user (1),
- At least a first (31) and a second (32) camera, the first camera (31) being configured to acquire images of the movements and positions of the at least one user (1) around the simulator (10), the second camera (32) being configured to acquire images of the gestures and handling of instruments (11) of the simulator (10) of the at least one user (1),
- At least one simulation procedure acquisition module (33) configured to connect to the simulator (10) and acquire the at least one medical procedure and simulation data,
- At least one processing module (50) configured to:
∘ process the at least one biological signal of the at least one user (1) and/or the images of the first camera (31) and/or of the second camera (32), the processing comprising computing the value of at least one metric representative of the training of the user (1) at each step of the medical procedure,
∘ create a training evaluation report (521) of the at least one user (1), the training evaluation report (521) comprising the value of the at least one metric at each step of the medical procedure.

2. System (2) according to the preceding claim **characterized in that** the at least one metric representative of the training of the user (1) is at least one metric of the metrics of attention of the user (1), of areas of interest for the user (1), of workload of the user (1), of distraction of the user (1), of emotional valency of the user (1).

3. System (2) according to any one of the preceding claims **characterized in that** the at least one processing module (50) is further configured to send the training evaluation report (521) through at least one network (60).

4. System (2) according to any one of the preceding claims **characterized in that** the user (1) sensing module comprises at least one of:
- At least one eye tracking submodule (22) comprising at least one eye tracker,
- At least one electroencephalography sensor (21),
- At least one microphone (23),
- At least one sensing clothing (24) comprising at least one sensor,
And **in that** the at least one biological signal of the at least one user (1) comprises at least one of:
- a signal of the points of gaze of the user (1) acquired by the eye tracking submodule (22),
- a signal of the cortical electrical activity of the user (1) acquired by the electroencephalography sensor (21),
- a signal of at least part of the sound produced by the user (1) acquired by the microphone (23),
- an electrocardiogram of the user (1) acquired by the sensing clothing (24),
- a signal of the breathing rate of the user (1) acquired by the sensing clothing (24),
- a signal of the temperature of the user (1) acquired by the sensing clothing (24),
- a signal of the accelerometry of the user (1) acquired by the sensing clothing (24).

5. System (2) according to any one of the preceding claims **characterized in that** the system (2) further comprises a sensing floor module (40) for acquiring at least a signal of the position of the user (1).

6. System (2) according to any one of the preceding claims **characterized in that** the system (2) further comprises at least one display module (70) and that the processing module (50) is further configured to send at each step of the simulation-based medical training the computed value of the at least one metric representative of the training of the user (1) to the at least one display module (70), the at least one display module (70) being configured to receive and display the computed value of the at least one metric representative of the training of the user (1).

7. Method (80) for evaluating simulation-based medical training of at least one user (1), the simulation-based medical training comprising at least one step and being carried out using a simulator (10), the method (80) being implemented by the system (2) according to any one of the preceding claims, the method (80) comprising at least the steps of :
- Acquiring (811), by the user sensing module (20), at least one biological signal of the user (1),
- Sending (812), by the user sensing module (20), the at least one biological signal of the user (1) to the processing module (50),
- Acquiring (821), by the first camera (31), images of the movements and positions of the at least one user (1) around the simulator (10),
- Sending (822), by the first camera (31), the images to the processing module (50),
- Acquiring (831), by the second camera (32), images of the gestures and handling of instruments (11) of the simulator (10) of the at least one user (1),
- Sending (832), by the second camera (32), the images to the processing module (50),
- Processing (85), by the processing module (50), the at least one biological signal of the user (1) and the images of the first camera (31) and of the second camera (32), the processing (85) comprising computing the value of at least one metric representative of the training of the user (1) at each step of the simulation-based medical training,
- Creating (86), by the processing module (50), a training evaluation report (521) of the at least one user, the training evaluation report (521) comprising the value of the at least one metric at each step of the simulation-based medical training.

8. Method (80) according to the preceding claim **characterized in that** it further comprises the steps of:
- Connecting (841), by the simulation procedure acquisition module (33), to the simulator (10),
- Acquiring (842), by the simulation procedure acquisition module (33), from the simulator (10), the at least one medical procedure and simulation data,
- Sending (843), by the simulation procedure acquisition module (33), the at least one medical procedure and simulation data previously acquired to the processing module (50).

9. Method (80) according to the preceding claim **characterized in that** it further comprises the steps of:
- Sending (871), by the processing module (50) and at each step of the simulation-based medical training, the computed value of the at least one metric representative of the training of the user (1) to the at least one display module (70),
- Receiving (872), by the at least one display module (70), the computed value of the at least one metric representative of the training of the user (1),
- Displaying (873), by the at least one display module (70), the computed value of the at least one metric representative of the training of the user (1).

10. Method (80) according to any one of claims 7 to 9 **characterized in that** it further comprises the step of sending (88) the training evaluation report (521) through at least one network.

11. A computer program product comprising instructions which, when the program is executed by a computer, causes the computer to carry out the method (80) according to any one of claims 7 to 10.

12. A computer-readable medium comprising instructions which, when executed by a computer, cause the computer to carry out the method (80) according to any one of claims 7 to 10.
